# EUROPEAN PATENT APPLICATION

(11) **EP 1 403 839 A1**
(43) Date of publication of application: **31.03.2004**
(21) Application number: 01945644.1
(22) Date of filing: 27.06.2001
(51) Int. Cl.: G09C 1/00

(54) **DATA ORIGINALITY VALIDATING METHOD AND SYSTEM**

(71) Applicant: FUJITSU LIMITED, Kawasaki-shi, Kanagawa 211-8588 (JP)
(72) Inventor: MAKITA, Ikuo, FUJITSU LIMITED, Kawasaki-shi, Kanagawa 211-8588 (JP); ISHIKAWA, Toshihisa, FUJITSU LIMITED, Kawasaki-shi, Kanagawa 211-8588 (JP)
(74) Representative: Sunderland, James Harry
(86) International application number: PCT/JP2001/005525
(87) International publication number: WO 2003/003329

(57) **Abstract**

RSP server 7 receives first data and at least first digital signature for the first data from a TC server 3. Next, it performs format conversion corresponding to a destination of the first data, for the received first data to generate second data. Then, it sends a TC server 5, which is associated with the destination, at least the second data generated in the format conversion, a format reverse-conversion program, and the first digital signature. In this way, by sending the format reverse-conversion program and the first digital signature for the first data, for which the format conversion is not performed, it becomes possible to confirm in the TC sever 5 that there is no alteration for the first data and etc. Namely, the TC server 5 can obtain the verification of the TC server 3, which is a transmission source.

## Description

### [TECHNICAL FIELD]

The present invention relates to data communication technology, more particularly to technology for verifying originality of data.

### [BACKGROUND TECHNOLOGY]

In E-commerce, in order to avoid alteration in document data such as a contract for a transaction, a predefined hash algorithm is applied to the document data, and the generated hash value is encrypted to generate a digital signature. Then, the digital signature with the encrypted document data is sent to a destination. The destination decrypts the encrypted document data, and further applies the predefined hash algorithm to generate a hash value. And, by decrypting the digital signature to restore a hash value, and comparing it with the generated hash value, it is possible to verify whether there is no alteration. In case of using such technology, it is possible to process only transactions between two companies without problems.

However, in international trading, many companies and various administrative agencies are involved. In the communication between only two parties of such companies and administrative agencies, the aforementioned technology may be applicable. However, if the document data involved by three or more companies and/or administrative agencies are communicated, the aforementioned technology is not always sufficient. For example, when document data is sent from A to C via B, a case may occur where the document data generated in A can not be processed as in the original format because of a system and/or regulation of C. In this case, B may convert the format of the document data to conform to the system and/or the regulation of C. However, such format conversion invalidates the verification of A as a transmission source.

### [SUMMARY OF THE INVENTION]

Therefore, an object of the invention is to provide technology for allowing to acquire the verification of a transmission source even if the document data is changed on the way.

In order to achieve the aforementioned object, an information processing method performed by, for example, a RSP (Repository Service Provider) server according to a first aspect of the invention includes a receiving step of receiving a first data (e.g., document data such as an invoice) and a first digital signature for at least the first data from a first computer (e.g., a TC (Trade Chain) server) ; a format conversion step of performing format conversion corresponding to a destination (including, for example, not only the direct destination but also destination country) of the first data, for the first data received in the receiving step to generate a second data; and a sending step of sending at least the second data generated in the format conversion step, a format reverse-conversion program for performing reverse conversion of the format conversion, and the first digital signature to a second computer (e.g., a TC server of the destination) associated with the destination.

Thus, by sending the format reverse-conversion program and the first digital signature for the first data before the format conversion, it becomes possible for the second computer to verify whether there is no alteration in the first data. That is, it becomes possible to obtain the verification of the first computer or its administrator or manager as the transmission source.

Incidentally, in the aforementioned receiving step, a third digital signature for at least the format reverse-conversion program may be further received. The first computer may guarantee the format reverse-conversion program to the destination. The format reverse-conversion program may be further received.

The method may further include the steps of: receiving a request for sending a format reverse-conversion program, including designation of the destination from the first computer; extracting the format reverse-conversion program corresponding to the destination from a format reverse-conversion program storage, and sending it to the first computer. A digital signature for thus sent format reverse-conversion program will be generated in the first computer.

An information processing method performed by, for example, a RSP server according to a second aspect of the invention, includes a step of receiving a first data and a first digital signature for at least the first data from a first computer; a format conversion step of performing format conversion corresponding to a destination of the first data, for the first data received in the receiving step to generate a second data; and a sending step of sending at least the second data generated in the format conversion step, identification information (for example, a format reverse-conversion program ID, or information on the transmission source if the format reverse-conversion program can be specified by information on the first computer as a transmission source) to identify a format reverse-conversion program for performing the format reverse-conversion, and the first digital signature to a second computer associated with the destination.

For example, if the format reverse-conversion program is kept in the second computer, the second computer can perform format reverse-conversion for the second data to restore the first data by sending only the identification information of the format reverse-conversion program, without sending the format reverse-conversion program.

An information processing method performed by, for example, a TC server of a transmission source according to a third aspect of the invention, includes a step of sending a request for sending a format reverse-conversion program for performing format reverse-conversion of format conversion, including designation of a destination of data, to a computer (for example, a RSP server in an embodiment) for performing the format conversion of data; and a sending step of generating, if the format reverse-conversion program is received from the computer for performing the format conversion of data, a digital signature for at least the format reverse-conversion program, and sending at least the generated digital signature, data, and the digital signature for the data to the computer for performing the format conversion of the data. Incidentally, the format reverse-conversion program may further be sent to the computer for performing the format conversion of the data.

By doing so, it becomes possible to confirm whether or not the format reverse-conversion program sent to a destination computer (for example, a TC server of a destination) is altered.

An information processing method performed by, for example, a TC server of a transmission source according to a fourth aspect of the invention, includes a step of sending a request for sending a format reverse-conversion program for performing format reverse-conversion of format conversion, including designation of a destination of data, to a computer for performing the format conversion of data; and a sending step of generating, if the format reverse-conversion program is received from the computer for performing the format conversion of data, a digital signature for at least the format reverse-conversion program and data, and sending at least the generated digital signature and the data to the computer for performing the format conversion of data. There is a case where the digital signature is generated and sent in a different manner from the third aspect of the invention.

An information processing method performed by, for example, a TC server of a destination according to a fifth aspect of the invention, includes a receiving step of receiving data for which format conversion for a destination has been performed, a digital signature for at least the data before the format conversion, and a format reverse-conversion program for performing reverse conversion of the format conversion; a step of performing format reverse-conversion for the data for which the format conversion has been performed, by using the received format reverse-conversion program to generate reversely converted data; a step of calculating a first hash value from at least the reversely converted data; a step of restoring a second hash value from the received digital signature; and a step of comparing the calculated first hash value with the restored second hash value to determine whether there is no alteration.

By doing so, it becomes possible to determine whether there is no alteration in the original data before processing by the RSP server and etc., even if the format conversion has been performed in the RSP server and etc. That is, it becomes possible to obtain verification of the transmission source.

Incidentally, there is a case where a second digital signature for the format reverse-conversion program is received in the receiving step and the method further includes the steps of: calculating a third hash value from the program reverse-conversion program; restoring a fourth hash value from the second digital signature; and comparing the calculated third hash value with the restored fourth hash value to determine whether there is no alteration. It becomes possible to confirm that the format reverse-conversion program is certified by the transmission source and has no alteration, if the second digital signature for the format reverse-conversion program is received like this.

An information processing method performed by, for example, a TC server of a destination according to a sixth aspect of the invention, includes a receiving step of receiving data for which format conversion for a destination has been performed, a digital signature for at least the data before the format conversion, and identification information to identify a format reverse-conversion program for performing reverse conversion of the format conversion; a step of extracting the format reverse-conversion program from a storage device by using the received identification information to identify the format reverse-conversion program; a step of performing the format reverse-conversion for the data for which the format conversion has been performed, by using the extracted format reverse-conversion program to generate a reversely converted data; a step of calculating a first hash value from the reversely converted data; a step of restoring a second hash value from the received digital signature; and a step of comparing the calculated first hash value with the restored second hash value to determine whether there is no alteration.

If the format reverse-conversion program is kept in the TC server of the destination, the format reverse-conversion program need not be sent each time the data is sent, instead, only the identification information for identifying the format reverse-conversion program may be merely sent. However, if the country of the transmission source is known, a relevant format reverse-conversion program may be identified, so that an ID of the format reverse-conversion program is not always necessary.

Incidentally, it is also possible to create a program for causing a computer to perform the information processing method according to the first to sixth aspects of the invention. The program may be stored in storage medium or storage device, such as a floppy disk, a CD-ROM, a magneto-optical disk, a semiconductor memory, and a hard disk. Also, the program may be distributed via a network such as the Internet. Incidentally, the intermediate processing data is temporarily stored in the computer memory.

### [BRIEF DESCRIPTION OF THE DRAWINGS]

Fig. 1 is a drawing showing a system outline according to a first embodiment;
Fig. 2 is a drawing showing an example of a management table stored in a storage unit for format conversion and format reverse-conversion programs;
Fig. 3 a drawing showing a digital signature and a cryptographic method;
Fig. 4 a drawing showing an outline of a processing according to the first embodiment;
Fig. 5 is a flowchart illustrating a processing flow according to the first embodiment;
Fig. 6 is a drawing showing an outline of a processing according to a second embodiment;
Fig. 7 is a flowchart illustrating a processing flow according to the second embodiment;
Fig. 8 is a drawing showing a system outline according to a second embodiment;
Fig. 9 is a drawing showing an example of a management table stored in a format reverse-conversion program storage unit;
Fig. 10 is a drawing showing an outline of a processing according to the third embodiment; and
Fig. 11 is a flowchart illustrating a processing flow according to the third embodiment.

### [BEST MODE FOR CARRYING OUT THE INVENTION]

### [First Embodiment]

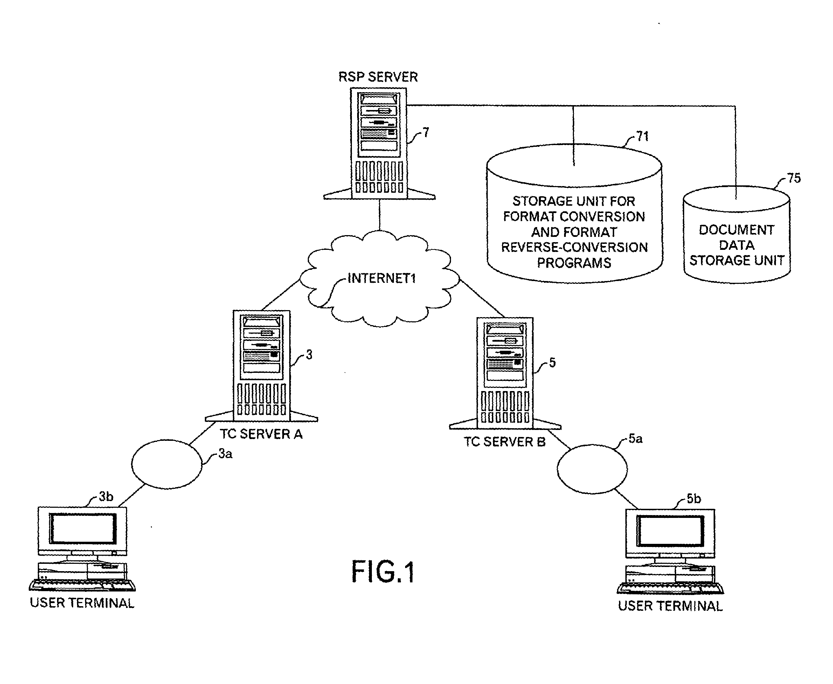

Fig. 1 schematically shows a system outline according to a first embodiment of the invention. The first embodiment is a first example in a case where the invention is applied to a trading EDI (Electric Data Interchange) system. Here, it is assumed that a document data need to be sent from a company A to a company B, and, for example, the document data according to regulations of a country to which the company A belongs need to be converted to document data according to regulations of a country to which the company B belongs.

The Internet 1 is a computer network, to which are connected a TC server A (3) managed and operated by the company A, which is a transmission source of the document data such as an invoice, a RSP server 7 for providing, for example, a format conversion service of the document data and a document data storage service, a TC server B (5) managed and operated by the company B which is, for example, the destination of the document data. Incidentally, not only two, but also a number of TC servers are connected to the Internet 1. Also, there is a case where not only one, but also a plurality of RSP servers 7 are provided.

The TC server A (3) is connected to one or a plurality of user terminals 3b via, for example, LAN (Local Area Network) 3a. Incidentally, it is possible to configure the connection via networks other than LAN, such as the Internet. An employee of the company A operates the user terminal 3b to instruct the TC server A (3) to send the document data. Similarly, the TC server B (5) is connected to one or a plurality of user terminals 5b via, for example, LAN 5a. Incidentally, it is possible to configure the connection via networks other than LAN, such as the Internet. An employee of the company B operates the user terminal 5b to instruct the TC server B (5) to receive the document data. Incidentally, the communication between the TC servers and the user terminals is encrypted by SSL (Secure Socket Layer Protocol) method. In this embodiment, the explanation on the processing at the user terminals is omitted.

The RSP server 7 manages a storage unit 73 for format conversion and format reverse-conversion programs, which stores a format conversion program to convert a format of the document data in accordance with the destination upon a request from the transmission source, and a format reverse-conversion program, and a document data storage unit 75 which stores the received document data and etc.

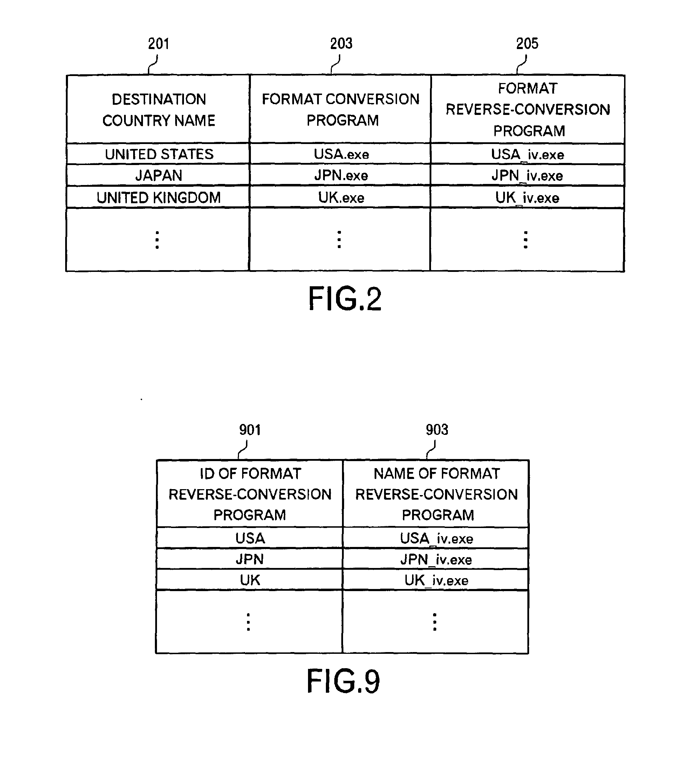

Fig. 2 shows an example of a management table for data stored in the storage unit 71 for format conversion and format reverse-conversion programs. In the example of Fig. 2, it contains a column 201 of destination country names, a column 203 of format conversion program names, and a column 205 of format reverse-conversion program names. For example, in a case where the destination country name is the United States, the format conversion program name is USA.exe, and the format reverse-conversion program name is USA_iv.exe. In a case where the destination country name is Japan, the format conversion program name is JPN.exe, and the format reverse-conversion program name is JPN_iv.exe. In a case where the destination country name is the United Kingdom, the format conversion program name is UK.exe, and the format reverse-conversion program name is UK_iv.exe. Such a management table is provided for each country of the transmission source. Incidentally, an example is shown in which the format conversion program and the format reverse-conversion program are provided for each country, but they may be provided not for each country, but for each zone or each company.

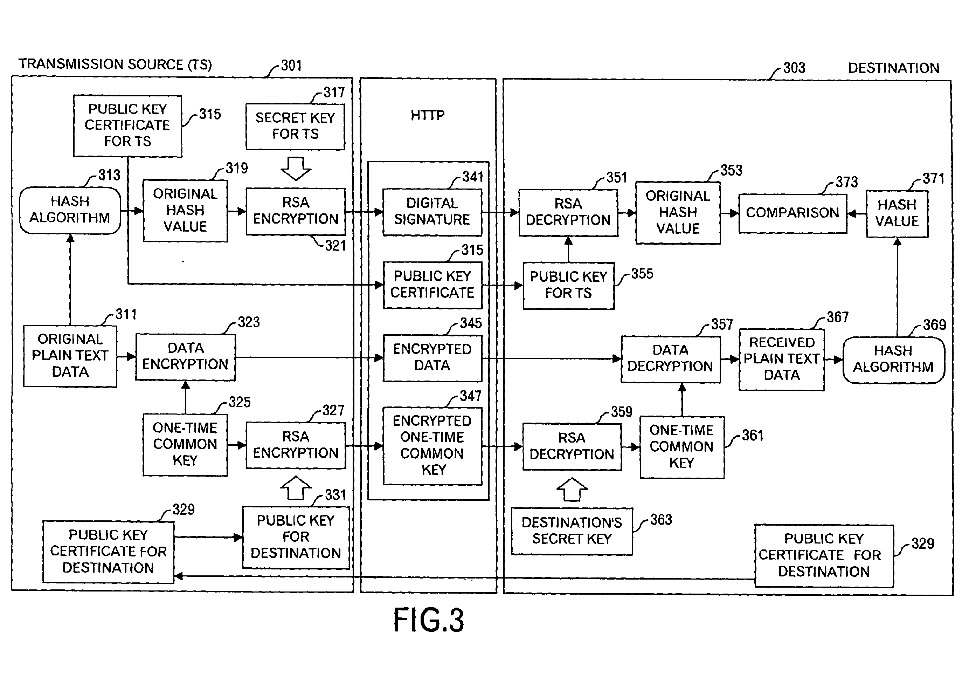

Subsequently, a processing flow of the system illustrated in Fig. 1 will be described. Before that, a processing when data is encrypted and sent between two computers will be described with reference to Fig. 3. In a case where an original plain text data 311 is encrypted and sent from a transmission source computer 301 to a destination computer 303, the transmission source computer 301 performs a data encryption process 323 for the original plain text data 311 using a one-time common key 325 to generate an encrypted data 345. For the data encryption process 323, for example, the triple DES (Data Encryption Standard) may be used. Also, a hash algorithm 313 using, for example, a hash function SHA-1 is applied to the original plain text data 311 to generate an original hash value 319. Then, for example, a RSA encryption process 321 is applied to the original hash value 319 using a secret key 317 of the transmission source, to generate a digital signature 341. Also, a RSA encryption process 327, for example, is applied to the one-time common key 325 using a destination's public key 331 obtained from a destination's public key certificate 329 to generate an encrypted one-time common key 347. The generated digital signature 341, the encrypted data 345, and the encrypted one-time common key 347 as well as the public key certificate 315 of the transmission source are sent to the destination computer 303 according to HTTP (Hyper Text Transfer Protocol), for example.

When the destination computer 303 receives the digital signature 341 and the public key certificate 315 of the transmission source, it reads out the public key 355 of the transmission source from the public key certificate 315 of the transmission source and performs a RSA decryption process 351 for the digital signature 341 to generate an original hash value 353. In addition, when it receives the encrypted data 345 and the encrypted one-time common key 347, it performs a RSA decryption process 359 for the encrypted one-time common key 347 using a destination's secret key 363 to restore the one-time common key 361. It performs a data decryption process 357 for the encrypted data 345 using the restored one-time common key 361 to generate received plain text data 367. Incidentally, the destination computer 303 keeps the destination's public key certificate 329, it will be sent to the transmission source, if necessary. The same hash algorithm 369 as one used in the transmission source is applied to the received plain text data 367, to generate a hash value 371. Then, by a comparison process 373 for the original hash value 353 and the generated hash value 371, it is verified whether the received plain text data has no alteration from the original plain text 311. Namely, if the original hash value 353 and the hash value 371 coincide with each other, there is no alteration. On the other hand, the two values do not coincide with each other, the alternation may possibly occur. If there is no alteration, the received plain text data can be used for the later process.

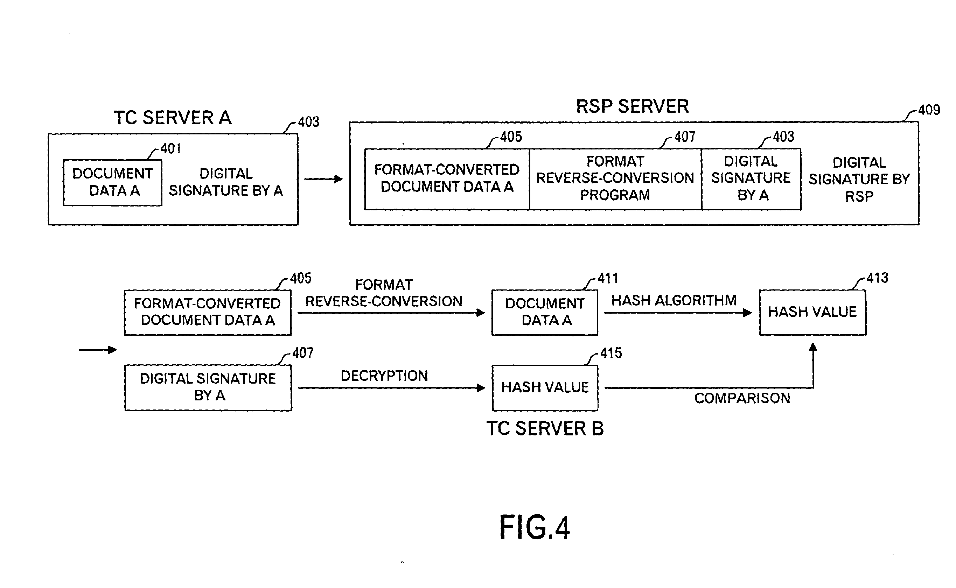

Based on the above-described processes, the outline of the processes according to the first embodiment will be described with reference to the Fig. 4. The TC server A (3) as a transmission source computer generates a document data A (401) such as an invoice, and generates a digital signature 403 by the company A for the document data A (401). Then, data in which the digital signature 403 by the company A is attached to the document data A (401) is sent to the RSP server 7. At this time, the processes illustrated in Fig. 3 are performed. That is, the digital signature 403 by the company A is generated by calculating a hash value of the document data A (401) and encrypting the generated hash value using the secret key of the company A. And, the document data A (401) is encrypted using the one-time common key, and the one-time common key is encrypted using the public key of the RSP. Then, the encrypted document data A (401), the encrypted one-time common key, the public key certificate for the company A, and the digital signature by the company A are sent to the RSP server 7.

The RSP server 7 performs the processes illustrated in Fig. 3 at reception. Namely, the RSP server 7 obtains the public key of the company A from the public key certificate of the company A, and performs a RSA decryption process for the digital signature by the company A to restore the original hash value. Also, the RSP server 7 obtain the one-time common key by decrypting the encrypted one-time common key using the secret key of the RSP, and then decrypts the encrypted document data A (401). By applying a hash algorithm to the decrypted document data A (401), it calculates a hash value, and then verifies whether there is no alteration by comparing it with the original hash value.

After that, the RSP server 7 performs the format conversion in accordance with the destination of the document data A (401) using the format conversion program to generate a format-converted document data A (405). Also, the RSP server 7 reads out a format reverse-conversion program 407 for performing reverse conversion of the format conversion from the storage unit 71 for format conversion and format reverse-conversion programs. Then, the RSP server 7 generates a digital signature 409 by the RSP for the format-converted document data A (405), the format reverse-conversion program 407, and the digital signature 403 by the company A. That is, it calculates a hash value from the format-converted document data A (405), the format reverse-conversion program 407 and the digital signature 403 by the company A, and then encrypts the calculated hash value using the secret key of the RSP. The RSP server 7 sends data in which the digital signature 409 by the RSP is attached to the format-converted document data A (405), the format reverse-conversion program 407, and the digital signature 403 by the company A to the TC server B (5).

At this sending step, the processes illustrated in Fig. 3 are performed. Namely, the format-converted document data A (405), the format reverse-conversion program 407, and the digital signature 403 by the company A as the original plain data are encrypted using the one-time common key, and the encrypted data together with the digital signature 409 by the RSP, the public key certificate of the RSP, and the one-time common key encrypted using the public key of the company B are sent to the TC server B (5). Incidentally, in this embodiment, the public key certificate of the company A may have to be sent to the TC server B (5). But, if the public key certificate of the company A can be obtained otherwise, it needs not be sent.

The TC server B (5) performs the processes illustrated in Fig. 3 at reception. Namely, the TC server B (5) obtains the public key of the RSP from the public key certificate of the RSP to perform the RSA decryption process for the digital signature 409 by the RSP, and restores the original hash value. Also, it decrypts the encrypted one-time common key using the secret key of the company B to obtain the one-time common key, and then decrypts the encrypted data 403 to 407. It calculates a hash value by applying the hash algorithm to the decrypted data 403 to 407, and compares the calculated hash value with the original hash value to verify whether there is no alteration.

In a case where it is confirmed that there is no alteration, it performs the format reverse-conversion for the format-converted document data A (405) using the format reverse-conversion program 407, to generate a document data A (411). Also, it applies the hash algorithm to the document data A (411) to calculate a hash value 413. On the other hand, when it reads out the public key of the company A from the public key certificate of the company A and decrypts the digital signature 407 by the company A using the public key of the company A, an original hash value 415 is restored. Therefore, by comparing the hash value 413 with the hash value 415, the format-converted document data A (405) can be verified whether it is generated from the authentic document data A (401).

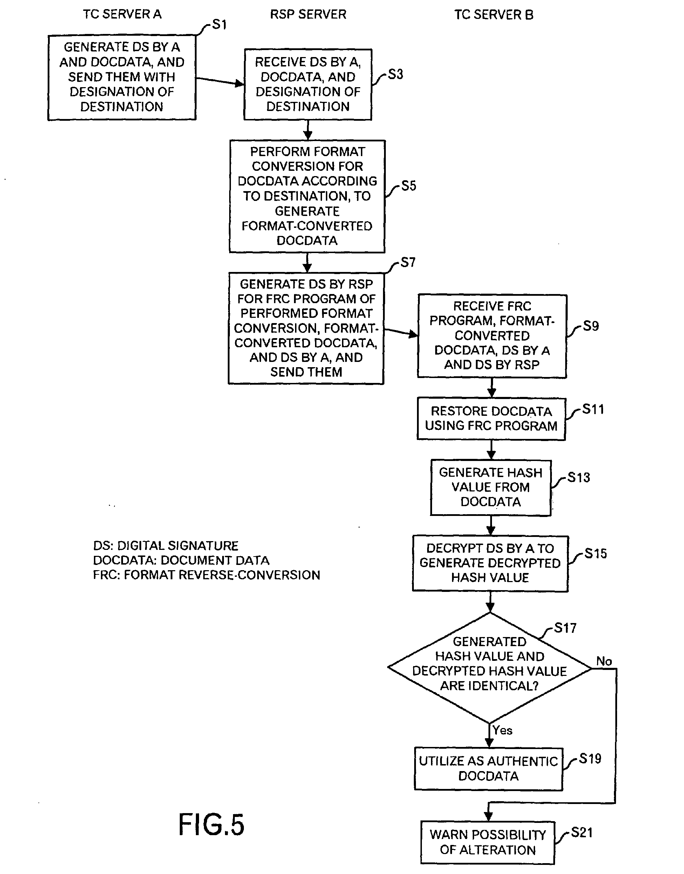

The aforementioned processes are summarized in Fig. 5. The TC server A (3) generates document data such as an invoice, generates the digital signature by the company A for the document data, and then sends the digital signature by the company A, the document data, and designation of the destination to the RSP server 7 (step S1). As mentioned above, the encryption is performed as shown in Fig. 3, and the encrypted data together with the public key certificate of the company A and the encrypted one-time common key are sent. The RSP server 7 receives the digital signature by the company A, the document data, and the designation of the destination from the TC server A (3) (step S3). At reception, the RSP server 7 decrypts the document data and verifies whether there is no alteration in the received document data as shown in Fig. 3. When it confirms that there is no alteration, it stores the document data in the document data storage unit 75.

The RSP server 7 also reads out the format conversion program for performing the format conversion according to the destination, from the storage unit 71 for format conversion and format reverse-conversion programs. By performing the format conversion for the document data using the format conversion program, it generates a format-converted document data and stores the generated data into the document data storage unit 75, for example (step S5). Then, the RSP server 7 reads out the format reverse-conversion program for performing the reverse conversion of the performed format conversion from the storage unit 71 for format conversion and format reverse-conversion programs, and generates a digital signature by the RSP for the format reverse-conversion program, the format-converted document data, and the digital signature by the company A. As described with reference to the Figs. 3 and 4, it calculates a hash value from the format reverse-conversion program, the format-converted document data and the digital signature by the company A, and encrypts the calculated hash value using the secret key of the RSP. Then, it sends the format reverse-conversion program, the format-converted document data, the digital signature by the company A, and the digital signature by the RSP to the TC server B (5) (step S7) . At sending step, as shown in Fig. 3, it encrypts the format reverse-conversion program, the format-converted document data and the digital signature by the company A, and sends the encrypted data together with the public key certificate of the RSP, the encrypted one-time common key, and so on. Further, the common key certificate of the company A may be sent as well.

The TC server B (5) receives the format reverse-conversion program, the format-converted document data, the digital signature by the company A, and the digital signature by the RSP from the RSP server 7 (step S9). At reception, as shown in Fig. 3, it decrypts the received data and verifies whether there is no alteration in the received data. When it is confirmed that there is no alteration, it performs the format reverse-conversion for the document data using the format reverse-conversion program to restore the document data (step S11). The restored document data is stored in a memory, for example. However, it is not yet verified whether this restored document data is identical with the data generated in the TC server A (3). Then, it generates a hash value from the restored document data (step S13). And, the TC server B (5) decrypts the digital signature by the company A using the public key of the company A to generate the decrypted hash value (step S15). Then, the TC server 5 compares the hash value generated in the step S13 with the decrypted hash value decrypted in the step S15 to determine whether they coincide with each other (step S17). If they coincide with each other, the restored document data is the authentic document data generated by the company A, and the format-converted document data can be used as the authentic document data (step S19). The document data is stored in a storage unit. On the other hand, if they do not coincide with each other, the restored document data cannot be regarded as the document data generated by the company A and format-converted using the conversion program approved by the company A, and a warning is issued to the user terminal 5b, for example (step S21).

By doing so, the original document data can be verified as the authentic document data originated by the transmission source, even if RSP server 7 performs the format conversion.

### [Second Embodiment]

In the first embodiment, the RSP server 7 itself has the format reverse-conversion program, and sends it to the TC server B (5) as the destination. On the other hand, the company A as the transmission source generates the digital signature for the document data. In other words, the company B obtains the conclusive evidence for the document data from the company A as the transmission source. But, for the format reverse-conversion program, the company B obtains the conclusive evidence only from the RSP server 7. In some cases, however, it is better to obtain the conclusive evidence from the company A for the format reverse-conversion program, too. This second embodiment presents an example in a case where the destination company B can obtains the conclusive evidence for the format reverse-conversion program from the company A as the transmission source.

Incidentally, the second embodiment has the same system configuration as that shown in Fig. 1. And, to explain as the second embodiment, the TC server A (3) changes its name to a TC server E (3E), and the TC server B (5) changes its name to a TC server F (5F).

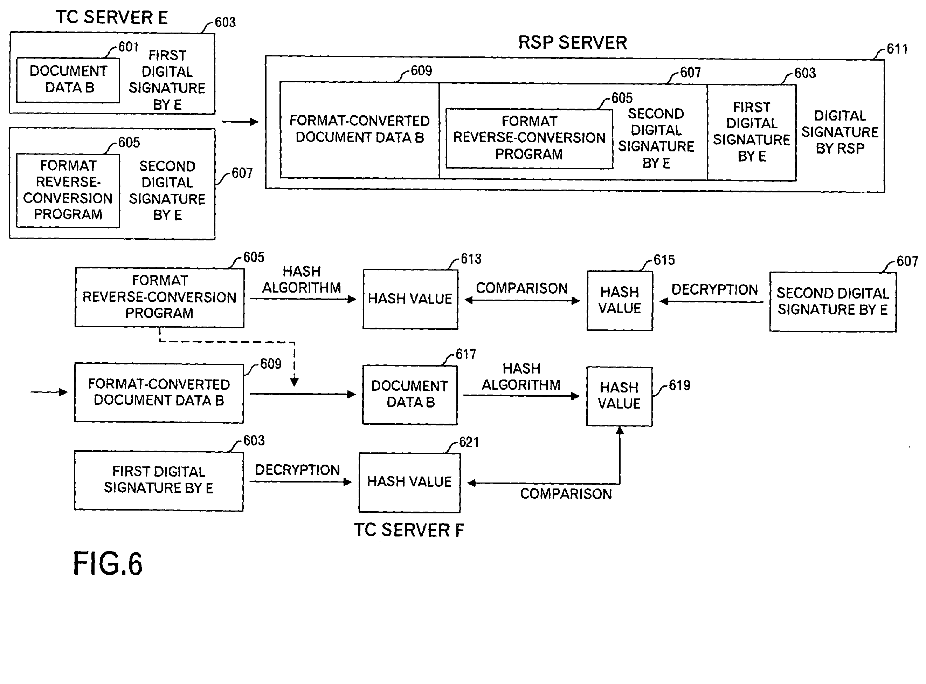

First of all, the outline of the processing will be described with reference to Fig. 6. First, the TC server E (3E) as the transmission source computer obtains a format reverse-conversion program 605 corresponding to the destination from the RSP server 7. At this time, the processes shown in Fig. 3 are performed. Namely, the RSP server 7 encrypts the format reverse-conversion program 605 using the one-time common key, and encrypts the one-time common key using a public key of the company E. It also calculates a hash value of the format reverse-conversion program 605 using a predefined hash algorithm, and generates a digital signature by encrypting the calculated hash value using the secret key of the RSP. Then, it sends the encrypted format reverse-conversion program 605, the public key certificate of the RSP, the encrypted one-time common key, and the digital signature to the TC server E (3E). The TC server E (3E) receives the encrypted format reverse-conversion program 605, the public key certificate of the RSP, the encrypted one-time common key and the digital signature, and decrypts the one-time common key using the secret key of the company E. Then, it decrypts the format reverse-conversion program 605 using the one-time common key. Also, the TC server E (3E) obtains the public key of the RSP from the public key certificate of the RSP, and decrypts the digital signature by the RSP to restore the original hash value. On the other hand, the TC server E (3E) calculates a hash value by applying the predefined hash algorithm to the program reverse-conversion program 605 to calculate a hash value. By comparing these hash values, it determines whether there is no alteration.

If there is no alteration, it generates a second digital signature 607 by the company E for the format reverse-conversion program 605. Namely, the TC server E (3E) applies a predefined hash algorithm to the format reverse-conversion program 605 to calculate a hash value, and encrypts the hash value using the secret key of the company E. Further, the TC server E (3E) generates a document data B (601) such as an invoice and a digital signature bt the company E for the document data B (601). That is, it calculates a hash value from the document data B (601) according to the predefined hash algorithm, and encrypts the hash value using the secret key of the company E.

Then, it sends data in which the first digital signature 603 by the company E is attached to the document data B (601) and data in which the second digital signature 607 by the company E is attached to the format reverse-conversion program 605 to the RSP server 7. At this time, the processes shown in Fig. 3 are performed. Namely, it generates the first digital signature 603 by the company E by calculating a hash value of the document data B (601) and encrypting the hash value using the secret key of the company E. The document data B (601) is also encrypted using the one-time common key, and the one-time common key is also encrypted using the RSP public key. Further, it generates the second digital signature 607 by the company E by calculating a hash value of the format reverse-conversion program 605 and encrypting the hash value using the secret key of the company E. In addition, the format reverse-conversion program 605 is encrypted using the one-time common key. Then, the encrypted document data B (601), the encrypted one-time common key, the public key certificate of the company E, the encrypted format reverse-conversion program 605, the first digital signature 603 by the company E and the second digital signature 607 by the company E are sent to the RSP server 7.

The RSP server 7 performs the processes shown in Fig. 3. That is, it obtains the public key of the company E from the public key certificate of the company E, and performs the RSP decryption process for the first digital signature 603 by the company E to restore an original hash value α1. Also, by decrypting the encrypted one-time common key using the secret key of the RSP, the RSP server 7 obtains the one-time common key, and decrypts the encrypted document data B (601). It calculates a hash value β1 by applying the hash algorithm to the decrypted document data B (601), and compares the calculated hash value β1 with the original hash value α1 to verify whether there is no alteration. Similarly, the RSP server 7 obtains the public key of the company E, and performs the RSA decryption process for the second digital signature 605 by the company E to restore an original hash value α2. Also, it decrypts the encrypted format reverse-conversion program 605 using the one-time common key. It calculates a hash value β2 to the format reverse-conversion program 605 by the predefined hash algorithm, and compares the hash value β2 with the original hash value α2 to verify whether there is no alteration.

After that, it performs the format conversion according to the destination of the document data B (601) using the format conversion program to generate a format-converted document data B (609). It also generates a digital signature 611 by the RSP for the format-converted document data B (609), the format reverse-conversion program 605, the second digital signature 607 by the company E, and the first digital signature 603 by the company E. That is, it calculates a hash value from the format-converted document data B (609), the format reverse-conversion program 605, the second digital signature 607 by the company E and the first digital signature 603 by the company E, and encrypts the hash value using the secret key of the RSP. The RSP server 7 sends data in which the digital signature 611 by the RSP is attached to the format-converted document data B (609), the format reverse-conversion program 605, the second digital signature 607 by the company E, and the first digital signature 603 by the company E to the TC server F (5F).

At this sending step, the processes shown in Fig. 3 are performed. Namely, the format-converted document data B (609), the format reverse-conversion program 605, the second digital signature 607 by the company E, and the first digital signature 603 by the company E, as plain text data, are encrypted using the one-time common key, and the encrypted data together with the digital signature 611 by the RSP, the public key certificate of the RSP, and the one-time common key encrypted using the public key of the company F is sent to the TC server F (5F). Incidentally, in this embodiment, the public key certificate of the company E may have to be sent to the TC server F (5F). However, if the public key certificate of the company E can be obtained otherwise, it need not be sent.

The TC server F (5F) performs the processes shown in Fig. 3 at reception. Namely, it obtains the public key of the RSP from the public key certificate of the RSP, and performs the RSA decryption processes for the digital signature 611 by the RSP to restore the original hash value. Also, it decrypts the encrypted one-time common key using the secret key of the company F to obtain the one-time common key and decrypts the encrypted data 603 to 609. It applies a hash algorithm to the decrypted data 603 to 609 to calculate a hash value, and then compares the hash value with the original hash value to verify whether there is no alteration.

If it is confirmed that there is no alteration, it calculates a hash value 613 from the format reverse-conversion program 605 by applying the predefined hash algorithm, and decrypts the second digital signature 607 by the company E using the public key of the company E to restore the original hash value 615. Then, by comparing the calculated hash value 613 with the original hash value 615, it verifies whether the format reverse-conversion program 605 is one approved by the company E.

If it is confirmed that the format reverse-conversion program 605 is one approved by the company E, it generates document data B (617) from the format-converted document data 609 using the format reverse-conversion program 605. Then, it generates a hash value 619 from the document data B (617) by the predefined hash algorithm. On the other hand, it reads out the public key of the company E from the public key certificate of the company E and decrypts the first digital signature 603 by the company E using the public key of the company E to restore the original hash value 621. Therefore, by comparing the hash value 619 with the hash value 621, it can verify if the format-converted document data 609 is one generated from the authentic document data B (601) , i.e., it is the document data generated by the company E and format-converted by the conversion program approved by the company E.

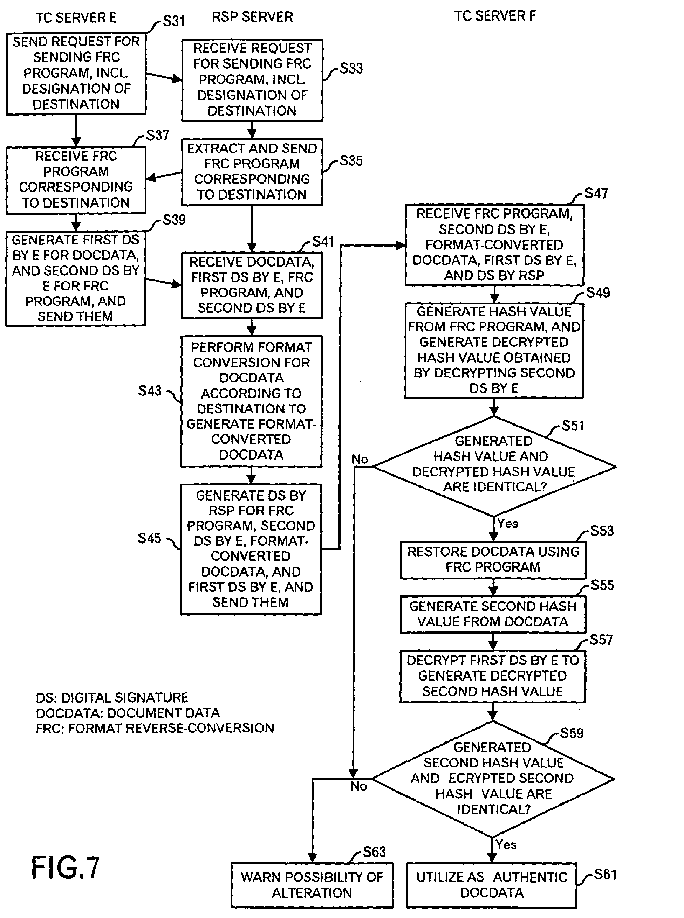

Next, the processing flow of the second embodiment will be described with reference to the Fig. 7. First, the TC server E (3E) sends a request for sending a format reverse-conversion program, including designation of the destination (step S31). The designation of the destination may be specified by the destination itself, or the destination's group, such as destination country. When the RSP server 7 receives the request for sending the format reverse-conversion program, including the designation of the destination, from the TC server E (3E) (step S33), it extracts the format reverse-conversion program corresponding to the destination from the storage unit 71 for format conversion and format reverse-conversion programs and sends it to the TC server E (3E) (step S35). Incidentally, the format reverse-conversion program may be specified by both of the transmission source and the destination. In such a case, the format reverse-conversion program corresponding to both of the transmission source and the destination is read out from the storage unit 71 for format conversion and format reverse-conversion programs. As shown in Fig. 3, the format reverse-conversion program is encrypted, then the encrypted format reverse-conversion program is sent together with the digital signature by the RSP, the public key certificate of the RSP, the encrypted one-time public key and so on.

The TC server E (3E) receives the format reverse-conversion program corresponding to the destination from the RSP server 7 (step S37). As shown in Fig. 3, the TC server E (3E) decrypts the one-time common key, and decrypts the format reverse-conversion program using the decrypted one-time common key. Furthermore, the TC server E (3E) calculates a hash value from the format reverse-conversion program, restores the original hash value from the digital signature by the RSP, and compares them to verify whether there is no alteration. Then, if there is no alteration, the TC server E (3E) generates a first digital signature by the company E for the document data, and generates a second digital signature by the company E for the format reverse-conversion program. Then, it sends the document data, the first digital signature by the company E for the document data, the format reverse-conversion program, and the second digital signature by the company E for the format reverse-conversion program to the RSP server 7 (step S39). At this time, the destination information may be sent again. Also here, the processes shown in Fig. 3 are performed. The TC server E (3E) calculates a hash value by applying the predefined hash algorithm to the document data and encrypts the hash value using the secret key of the company E to generate the first digital signature by the company E. It also calculates a hash value by applying the predefined hash algorithm to the format reverse-conversion program and encrypts the hash value using the secret key of the company E to generate a second digital signature by the company E. In addition, it encrypts the document data and the format reverse-conversion program using the one-time common key, and then encrypts the one-time common key using the public key of the RSP. Then, it sends them as well as the public key certificate of the company E to the RSP server 7.

The RSP server 7 receives the first digital signature by the company E, the document data, the second digital signature by the company E, and the format reverse-conversion program from the TC server E (3E) (step S41). At reception, it decrypts the document data, and verifies whether there is no alteration in the received document data, as shown in Fig. 3. If it is confirmed that there is no alteration, the document data is stored in the document data storage unit 75. Also, it decrypts the encrypted format reverse-conversion program, and verifies whether there is no alteration in the received format reverse-conversion program.

Then, the RSP server 7 reads out the format conversion program corresponding to the destination from the storage unit 71 for format conversion and format reverse-conversion programs to perform the format conversion. Then, it uses the read format conversion program to perform the format conversion for the document data to generate a format-converted document data, and stores it in the document data storage unit 75, for example (step S43). Then, it generates a digital signature by the RSP for the received format reverse-conversion program, the second digital signature by the company E, the format-converted document data, and the second digital signature by the company E. As described with reference to Figs. 3 and 6, it calculates a hash value from the format reverse-conversion program, the second digital signature by the company E, the format-converted document data, and the first digital signature by the company E, and encrypts the hash value using the secret key of the RSP. Then, it sends the format reverse-conversion program, the second digital signature by the company E, the format-converted document data, the first digital signature by the company E, and the digital signature by the RSP to the TC server F (5F) (step S45). At sending, it encrypts the format reverse-conversion program, the second digital signature by the company E, the format-converted document data and the first digital signature by the company E, and sends them together with the public key certificate of the RSP and the encrypted one-time common key, as shown in Fig. 3. Incidentally, the common key certificate of the company E may be sent.

The TC server F (5F) receives the format reverse-conversion program, the second digital signature by the company E, the format-converted document data, the second digital signature by the company E and the digital signature by the RSP from the RSP server 7 (step S47). At reception, it decrypts the received data and verifies whether there is no alteration in the received data, as shown in Fig. 3. If it is confirmed that there is no alteration, the TC server F (5F) applies the predefined hash algorithm to the format reverse-conversion program to generate a hash value, and decrypts the second digital signature by the company E using the public key of the RSP to generate the decrypted hash value (step S49). Then, the TC server F (5F) compares the generated hash value with the decrypted hash value to verify whether the format reverse-conversion program is one contemplated by the transmission source (step S51). If the generated hash value and the decrypted hash value do not coincide with each other, the format reverse-conversion program is not one contemplated by the transmission source. Therefore, the process proceeds to step S63, and a warning to the effect that the format reverse-conversion program is not approved by the company E is issued.

On the other hand, if it is determined that they coincide with each other in the step S51, by using the format reverse-conversion program, it performs the format reverse conversion for the document data to restore the document data (step S53). The restored document data is stored in a memory, for example. However, it is not yet verified whether this restored document data is the same as the data generated by the TC server E (3E). Then, it generates a second hash value from the restored document data (step S55). Also, it decrypts the first digital signature by the company E using the public key of the company E to generate the decrypted second hash value (step S57). The TC server F (5F) compares the second hash value generated in the step S55 with the second hash value decrypted in the step S57 to determine if they coincide with each other (step S59). If they coincide with each other, the document data is the authentic document data by the company E, thus, the format-converted document data can be used as the authentic document (step S61). The document data is stored in a storage unit. However, if they do not coincide with each other, the data cannot be regarded as the document data generated by the company E and format-converted by the conversion program approved by the company E. Therefore, a warning is issued to the user terminal 5b, for example (step S63).

Like this, it becomes possible to verify whether the original document data is the authentic document data by the transmission source even if the RSP server 7 performs the format conversion. Also, it can be verified whether the format reverse-conversion program to be executed in the TC server F (5F) is the format reverse-conversion program contemplated by the transmission source, therefore it can be reliably executed by the TC server F (5F).

In some cases, the format reverse-conversion program may not be sent from the TC server E (3E) to the RSP server 7 in the step S39. Also, though the digital signatures by the company E are separately generated for each of the format reverse-conversion program and the document data, one digital signature by the company E may be generated collectively.

### [Third Embodiment]

In the first and second embodiments, the format reverse-conversion program is sent from the RSP server to the TC server of the destination. However, if the destination keeps a set of the format reverse-conversion programs and can specify the format reverse-conversion program to be executed at the destination, the format reverse-conversion program need not be sent each time the document data is sent. In the third embodiment, an example in a case where the destination keeps the set of the format reverse-conversion programs will be described.

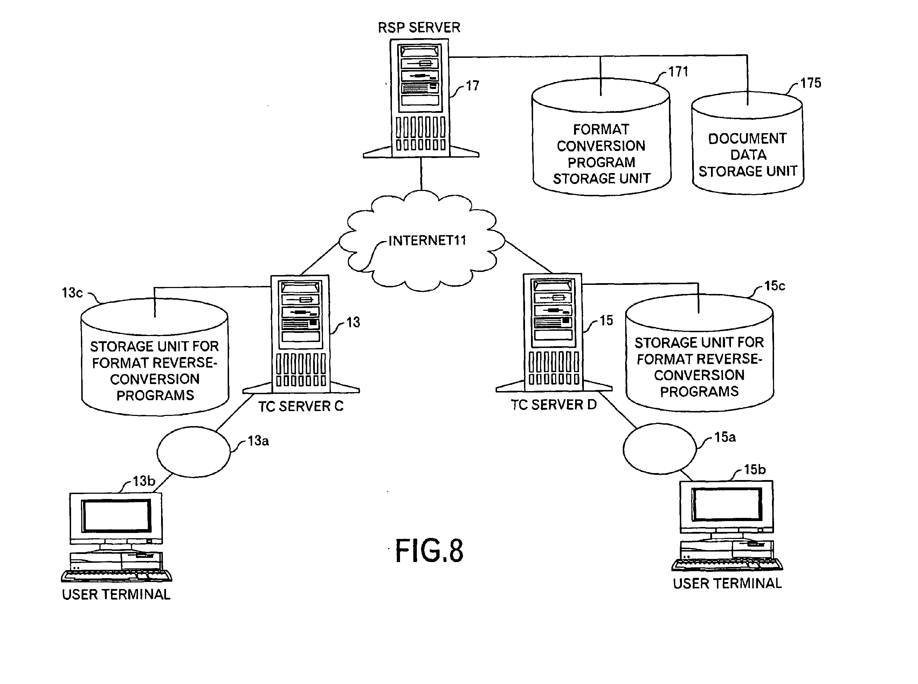

Fig. 8 shows a drawing of a system outline according to the third embodiment of the invention. A TC server C (13) managed and operated by a company C, which is a transmission source of the document data such as an invoice, a RSP server 17 for providing a format conversion service of document data and a document data service, a TC server D (15) managed and operated by a company D, which is a destination of the document data, are connected to the Internet 11, which is a computer network. Not only two, but also a number of TC servers are connected to the Internet 11. Also, not only one, but also a plurality of RSP servers 17 may be provided.

The TC server C (13) is connected to one or a plurality of user terminals 13b via, for example, LAN (Local Area Network) 13a. Incidentally, it is possible to configure the connection via networks other than LAN, such as the Internet. An employee of the company C operates the user terminal 13b to instruct the TC server C (13) to send the document data. In addition, the TC server C (13) manages a storage unit 13c for format reverse-conversion programs, which stores the format reverse-conversion programs. Similarly, the TC server D (15) is connected to one or a plurality of user terminals 15b via, for example, LAN 15a. Incidentally, it is possible to configure the connection via networks other than LAN, such as the Internet. An employee of the company D operates the user terminal 15b to instruct the TC server D (15) to receive the document data. Similarly, the TC server D (15) manages a storage unit 15c for format reverse-conversion programs, which stores the format reverse-conversion programs. In this embodiment, the explanation on the processing at the user terminals is omitted.

The RSP server 17 manages a format conversion program storage unit 171, which stores the format conversion programs to perform format conversion of document data upon a request from a transmission source according to a destination, and a document data storage unit 175, which stores the received document data and etc.

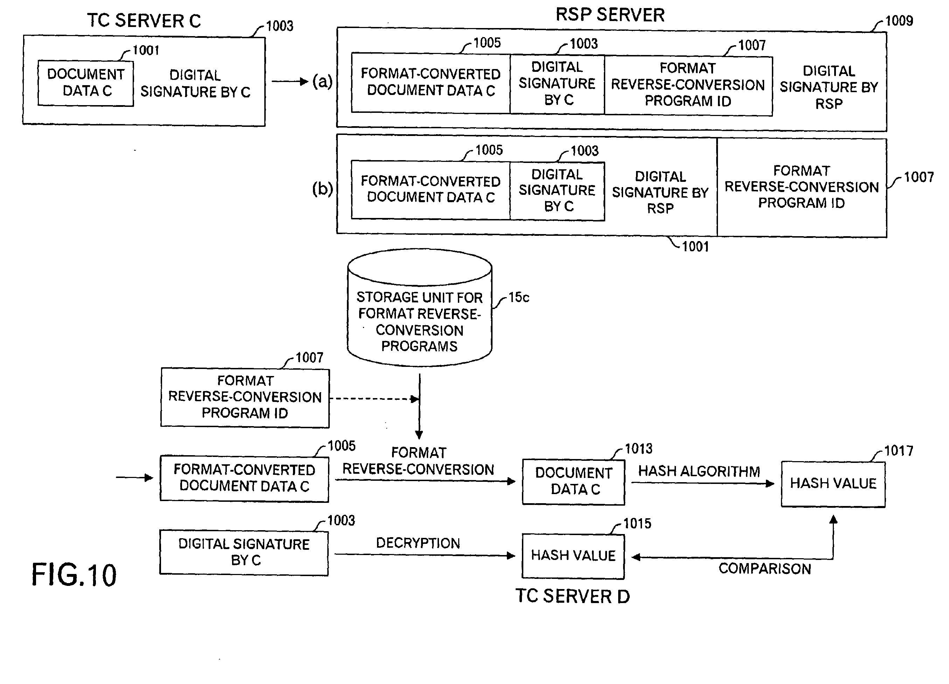

Fig. 9 shows an example of a management table of data stored in the storage unit 13c and 15c for format reverse-conversion programs. In the example of Fig. 9, the management table includes a column 901 of a format reverse-conversion program ID and a column 903 of a format reverse-conversion program name. For example, in a case where the country name of the transmission source is the United States, the ID of the format reverse-conversion program is set to USA, and the name of the format reverse-conversion program corresponding to the ID is USA_iv.exe. In a case where the country name of the transmission source is Japan, the ID of the format reverse-conversion program is set to JPN, and the name of the format reverse-conversion program is JPN_iv.exe. In a case where the country name of the transmission source is the United Kingdom, the ID of the format reverse-conversion program is set to UK, and the name of the format reverse-conversion program is UK_iv.exe. Incidentally, an example is shown in which the format reverse-conversion program is provided for each country, but it may be provided not for each country, but for each zone or each company.

Incidentally, in the format conversion program storage unit 171, a management table is provided, which stores the names of the format conversion programs correspondingly to the destination country name. Incidentally, the management table is provided for each country of the transmission source, and the ID of the format reverse-conversion program is stored correspondingly to the management table. Incidentally, the management table may not be provided for each country, but for each zone or each company.

Next, the outline of the processing of the third embodiment will be described with reference to Fig. 10. The TC server C (13) as a transmission source computer generates document data C (1001) such as an invoice, and a digital signature by the company C for the document data C (1001). Then, it sends data in which the digital signature 1003 by the company C is attached to the document data C (1001) to the RSP server 17. At this time, the processes shown in Fig.3 are performed. That is, it calculates a hash value of the document data C (1001) and encrypts the hash value using a secret key of the company C to generate the digital signature 1003 by the company C. Also, the document data C (1001) is encrypted using a one-time common key, and the one-time common key is also encrypted using a public key of the RSP. Then, it sends the encrypted document data C (1001) , the encrypted one-time common key, a public key certificate of the company C, and the digital signature 1003 by the company C to the RSP server 17.

The RSP server 17 performs the processes shown in Fig. 3 at reception. The RSP server 17 obtains the public key of the company C from the public key certificate of the company C, and performs the RSA decryption process for the digital signature 1003 by the company C to restore the original hash value. Also, it decrypts the encrypted one-time common key using the secret key of the RSP to obtain the one-time common key and decrypts the encrypted document data C (1001). It calculates a hash value by applying the predefined hash algorithm to the decrypted document data C (1001), and then compares the calculated hash value with the original hash value to verify whether there is no alteration.

After that, it performs the format conversion by the format conversion program according to the destination of the document data C (1001), to generate format-converted document data C (1005). Then, it generates a digital signature by the RSP 1009 for the format-converted document data C (1005), a format reverse-conversion program ID 1007 and the digital signature 1003 by the company C. That is, it calculates a hash value from the format-converted document data C (1005), the format reverse-conversion program ID 1007 and the digital signature 1003 by the company C, and then encrypts the calculated hash value using the secret key of the RSP. The RSP server 17 sends data in which the digital signature by the RSP 1009 is attached to the format-converted document data C (1005), the format reverse-conversion program ID 1007, and the digital signature 1003 by the company C to the TC server D (15).

Incidentally, the digital signature by the RSP may not be generated for the format reverse-conversion program ID 1007. That is, in a case where information of the transmission source (e.g., the country name, the company identifier, or the address in the network on the transmission source) is used as a format reverse-conversion program ID, the digital signature by the RSP may not need be generated for the format reverse-conversion program ID 1007. In such a case, the format conversion according to the destination of the document data C (1001) is performed by the format conversion program to generate the format-converted document data C (1005). Also, it reads out the format reverse-conversion program ID 1007 from the format conversion program storage unit 171. Then, it generates the digital signature 1009 by the RSP for the format-converted document data C (1005) and the digital signature 1003 by the company C. That is, the RSP server 17 calculates a hash value from the format-converted document data C (1005) and the digital signature 1003 by the company C, and encrypts the calculated hash value using the secret key of the RSP. The RSP server 17 sends data in which the digital signature 1009 by the RSP and the format reverse-conversion program ID 1007 are attached to the format-converted document data C (1005), the digital signature 1003 by the company C to the TC server D (15).

At this sending, the processes shown in Fig. 3 are performed. In the first example (a) as described above, the format-converted document data C (1005) , the format reverse-conversion program ID 1007, and the digital signature 1003 by the company C as original plain text data are encrypted using a one-time common key. The encrypted data, the digital signature 1009 by the RSP, the public key certificate of the RSP, and the one-time common key encrypted using the public key of the company D are sent to the TC server D (15). Incidentally, in this embodiment, the public key certificate of the company C may have to be sent to the TC server D (15). However, in a case where the public key certificate of the company C can be obtained by other means, it need not be sent.

In the second example (b) as described above, the format-converted document data C (1005), the digital signature 1003 by the company C as original plain text data are encrypted using a one-time common key, and the encrypted data, a format reverse-conversion program ID 1006, the digital signature 1009 by the RSP, the public key certificate of the RSP, and the one-time common key encrypted by the public key of the company D are sent to the TC server 15.

The TC server D (15) performs the processes shown in Fig. 3 at reception. Namely, it obtains the public key of the RSP from the public key certificate of the RSP, and performs the RSA decryption process for the digital signature 1009 by the RSP to restore the original hash value. Also, it decrypts the encrypted one-time common key using the secret key of the company D to obtain the one-time common key, and decrypts the encrypted data 1003 to 1007 using the one-time common key. It applies the hash algorithm to the decrypted data 1003 to 1007 to calculate the hash value, and then compares the calculated hash value with the original hash value to verify whether there is no alteration. In the second example as described above, it obtains the public key of the RSP from the public key certificate of the RSP, and performs the RSA decryption process for the digital signature 1009 by the RSP to restore the original hash value. Also, it obtains the one-time common key by decrypting the encrypted one-time common key using the secret key of the company D, and decrypts the encrypted data 1003 and 1005. It calculates a hash value by applying the hash algorithm to the decrypted data 1003 and 1005, and then compares the calculated hash value with the original hash value to verify whether there is no alteration.

If it is confirmed that there is no alteration, it uses the format reverse-conversion program ID 1007 to extract the corresponding format reverse-conversion program from the storage unit 15c for format reverse-conversion programs. Then, it performs the format reverse conversion for the format-converted document data C (1005) using the extracted format reverse-conversion program to generate document data C (1013). Also, it applies the hash algorithm to the document data C (1013) to calculate a hash value 1017. On the other hand, it reads out the public key of the company C from the public key certificate of the company C, and decrypts the digital signature 1003 by the company C using the public key of the company C to restore the original hash value 1015. Therefore, by comparing the hash value 1017 with the hash value 1015, it can verify whether the format-converted document data C (1005) is one generated from the authentic document data C (1001).

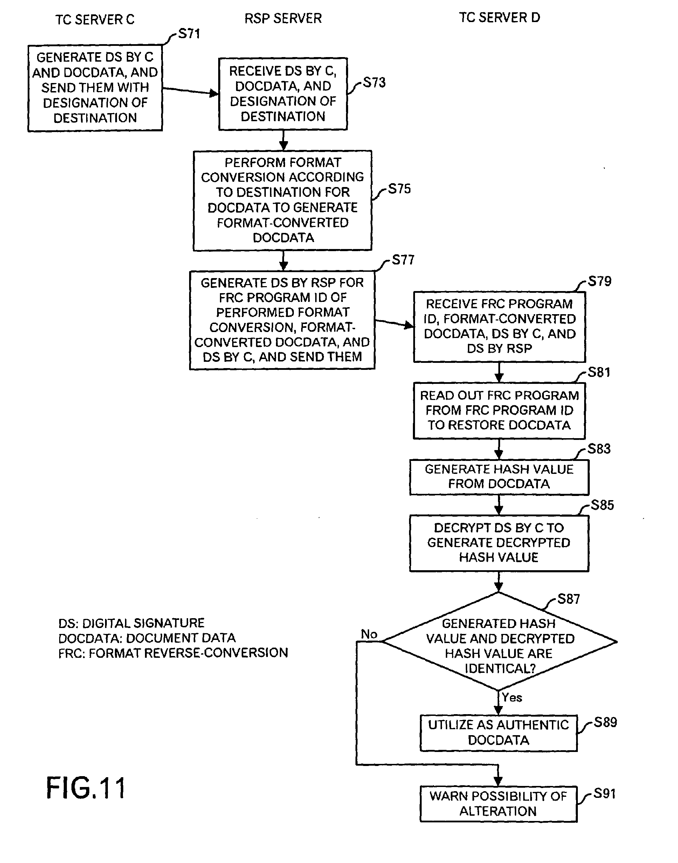

The aforementioned processing is summarized in Fig. 11. The TC server C (13) generates the document data such as an invoice, generates the digital signature by the company C for the document data, and sends the digital signature by the company C, and the document data together with designation of the destination to the RSP server 17 (step S71). Incidentally, the information on the transmission source (e.g., identification information) is also sent. As described above and shown in Fig. 3, the data is encrypted and sent together with the public key certificate of the company C and the encrypted one-time common key. The RSP server 17 receives the digital signature by the company C, the document data, and designation of the destination from the TC server C (13) (step S73). It also receives information on the transmission source. At reception, as shown in Fig. 3, it decrypts the document data, and verifies whether there is no alteration in the received document data. If it is confirmed that there is no alteration, it stores the data in the document data storage unit 75.

In addition, it reads out the format conversion program to perform the format conversion according to the destination from the format conversion program storage unit 171. Then, it performs the format conversion for the document data using the format conversion program to generate the format-converted document data, and stores the format-converted document data in the document data storage unit 75, for example (step S75). Then, it reads the format reverse-conversion program ID for performing the reverse conversion of the performed format conversion from the format conversion program storage unit 171 based on, for example, the information on the transmission source. And, it generates a digital signature by the RSP for the format reverse-conversion program ID, the format-converted document data and the digital signature by the company C. As described, the digital signature by the RSP may be generated for the format-converted document data and the digital signature by the company C. As described with reference to Figs. 3 and 10, it calculates a hash value from the format reverse-conversion program ID, the format-converted document data and the digital signature by the company C, and encrypts the calculated hash value using the secret key of the RSP. It may calculate a hash value from the format-converted document data and the digital signature by the company C, and encrypt the calculated hash value using the secret key of the RSP. Then, it sends the format reverse-conversion program ID, the format-converted document data, the digital signature by the company C, and the digital signature by the RSP to the TC server D (15) (step S77). At sending, as shown in Fig. 3, the format reverse-conversion program ID, the format-converted document data, and the digital signature by the company C are encrypted, and sent together with the public key certificate of the RSP, the encrypted one-time common key and so on. As described, the format reverse-conversion program ID may be sent without encryption. Incidentally, the common key certificate of the company C may be sent as well.

The TC server D (15) receives the format reverse-conversion program ID, the format-converted document data, the digital signature by the company C, and the digital signature by the RSP from the RSP server 17 (step S79). At reception, as shown in Fig. 3, it decrypts the received data and verifies whether the received data is not altered. If it is confirmed that there is no alteration, the TC server D (15) uses the format reverse-conversion program ID to read out the corresponding format reverse-conversion program from the format reverse-conversion program storage unit 15c. Then, it performs the format reverse-conversion for the document data to restore the document data (step S81). The restored data is stored in a memory. However, it is not verified yet if this restored document data is the same as the data generated in the TC server C (13). Then, it generates a hash value from the restored document data (step S83). Also, it decrypts the digital signature by the company C using the public key of the company C to generate the decrypted hash value (step S85). Then, it compares the hash value generated in the step S83 with the hash value decrypted in the step S85 to determine whether they coincide with each other (step S87). If they coincide with each other, that document data is the authentic document data by the company C, thus, the format-converted document data can be used as authentic document data (step S89). The document data is stored in a storage unit, for example. On the other hand, if they do not coincide with each other, the document data is not regarded as data generated by the company C and converted by the conversion program approved by the company C, and a warning is issued to the user terminal 15b (step S91).

Thus, the original document data can be verified as the authentic document data by the transmission source, even if the format conversion is performed by the RSP server 17.

While the embodiments of the invention have been described, the invention is limited to the aforementioned embodiments. For example, the names such as a TC server or a RSP server are only examples, and computers with other names but with the same functions can be employed as well. Also, the TC server and/or RSP server may not be implemented with a single computer, but a plurality of computers. Also, RSA is used for the public key cryptographic methods, but other cryptographic methods including ElGamal cryptosystem, elliptic curve cryptosystem, and hyper-elliptic curve cryptosystem may be employed. The common key cryptographic method is not limited to DES. The example is given as to the format conversion, but other conversions shall be included.

## Claims

1. An information processing method, comprising:
a receiving step of receiving first data and a first digital signature for at least said first data from a first computer;
a format conversion step of performing format conversion corresponding to a destination of said first data, for said first data received in said receiving step to generate second data; and
a sending step of sending at least said second data generated in said format conversion step, a format reverse-conversion program for performing reverse conversion of the format conversion, and said first digital signature to a second computer associated with said destination.

2. The information processing method as set forth in claim 1, **characterized in that** said information processing method further comprises a digital signature generating step of generating a second digital signature for at least said second data generated in said format conversion step, said format reverse-conversion program, and said first digital signature, and said second digital signature is sent to said second computer in said sending step.

3. The information processing method as set forth in claim 1, **characterized in that** a third digital signature for at least said format reverse-conversion program is received in said receiving step.

4. The information processing method as set forth in claim 3, **characterized in that** said information processing method further comprises a digital signature generating step of generating a fourth digital signature for said second data generated in said format conversion step, said format reverse-conversion program, said third digital signature, and said first digital signature, and said third digital signature and said fourth digital signature are sent to said second computer in said sending step.

5. The information processing method as set forth in claim 3, further comprising the steps of:
receiving a request for sending a format reverse-conversion program from said first computer, said request including designation of a destination; and
extracting a format reverse-conversion program corresponding to said destination from a format reverse-conversion program storage, and sending the extracted format reverse-conversion program to said first computer.

6. The information processing method as set forth in claim 1, **characterized in that** said format reverse-conversion program and a third digital signature for said format reverse-conversion program are received in said receiving step.

7. An information processing method, comprising:
a receiving step of receiving first data and a first digital signature for at least said first data from a first computer;
a format conversion step of performing format conversion corresponding to a destination of said first data, for said first data received in said receiving step to generate a second data; and
a sending step of sending at least said second data generated in said format conversion step, identification information for identifying a format reverse-conversion program for performing reverse conversion of the format conversion, and said first digital signature to a second computer associated with said destination.

8. The information processing method as set forth in claim 7, **characterized in that** said information processing method further comprises a digital signature generating step of generating a second digital signature for at least said second data generated in said format conversion step and said first digital signature, and said second digital signature is sent to said second computer at said sending step.

9. The information processing method as set forth in claim 8, **characterized in that** said digital signature generating step comprises a step of generating a second signature for at least said second data generated in said step of performing format conversion, said identification information for identifying a format reverse-conversion program, and said first digital signature.

10. An information processing method, comprising:
a step of sending a computer for performing format conversion of data a request for sending a format reverse-conversion program for performing reverse conversion of said format conversion, said request including designation of a destination of data; and
a sending step of generating, if said format reverse-conversion program is received from said computer for performing format conversion of data, a digital signature for at least said format reverse-conversion program, and sending at least the generated digital signature, said data, and said digital signature for said data to said computer for performing format conversion of data.

11. The information processing method as set forth in claim 10, **characterized in that** the generated digital signature, said data, said digital signature for said data, and said format reverse-conversion program are sent to said computer for performing format conversion of data in said sending step.

12. An information processing method, comprising:
a step of sending a computer for performing format conversion of data a request for sending a format reverse-conversion program for performing reverse conversion of said format conversion, said request including designation of a destination of data; and
a sending step of generating, if said format reverse-conversion program is received from said computer for performing format conversion of data, a digital signature for at least said format reverse-conversion program and said data, and sending at least the generated digital signature and said data to said computer for performing format conversion of data.

13. An information processing method, comprising:
a receiving step of receiving data for which format conversion has been performed according to a destination of said data, a digital signature for at least said data before said format conversion, and a format reverse-conversion program for performing reverse conversion of said format conversion;
a step of performing the reverse conversion for said data for which format conversion has been performed, by the received format reverse-conversion program, to generate reversely converted data;
a step of calculating a first hash value from at least said reversely converted data;
a step of restoring a second hash value from the received digital signature; and
a step of comparing the calculated first hash value with the restored second hash value to determine whether there is no alteration.

14. The information processing method as set forth in claim 13, **characterized in that** a digital signature for said data for which format conversion has been performed, said digital signature for at least said data before said format conversion, and said format reverse-conversion program is further received in said receiving step.

15. The information processing method as set forth in claim 13, wherein a second signature for said program reverse-conversion program is received in the receiving step,
and further comprising the steps of:
calculating a third hash value from said program reverse-conversion program;
restoring a fourth hash value from said second digital signature; and
comparing the calculated third hash value with the restored fourth hash value to determine whether there is no alteration.

16. The information processing method as set forth in claim 15, **characterized in that** a digital signature for said data for which format conversion has been performed, said digital signature for at least said data before said format conversion, said format reverse-conversion program, and said second digital signature for said format reverse-conversion program is further received in said receiving step.

17. An information processing method, comprising:
a receiving step of receiving data for which format conversion has been performed according to a destination of said data, a digital signature for at least said data before said format conversion, and identification information for identifying a format reverse-conversion program for performing reverse conversion of said format conversion;
a step of extracting said format reverse-conversion program from a storage by using the received identification information for identifying said format reverse-conversion program;
a step of performing the reverse conversion for said data for which format conversion has been performed, by using the extracted format conversion program, to generate reversely converted data;
a step of calculating a first hash value from at least said reversely converted data;
a step of restoring a second hash value from the received digital signature; and
a step of comparing the calculated first hash value with the restored second hash value to determine whether there is no alteration.

18. The information processing method as set forth in claim 17, **characterized in that** a digital signature for said data for which format conversion has been performed, said digital signature for at least said data before said format conversion, said identification information for identifying said format reverse-conversion program, and a second digital signature for said format reverse-conversion program is further received in said receiving step.

19. A program for causing a computer to execute:
a receiving step of receiving first data and a first digital signature for at least said first data from a first computer;
a format conversion step of performing format conversion corresponding to a destination of said first data, for said first data received in said receiving step to generate second data; and
a sending step of sending at least said second data generated in said format conversion step, a format reverse-conversion program for performing reverse conversion of the format conversion, and said first digital signature to a second computer associated with said destination.

20. The program as set forth in claim 19, **characterized in that** a third digital signature for at least said format reverse-conversion program is received in said receiving step.

21. The program as set forth in claim 20, for causing a computer to further execute the steps of:
receiving a request for sending a format reverse-conversion program from said first computer, said request including designation of a destination; and
extracting a format reverse-conversion program corresponding to said destination from a format reverse-conversion program storage, and sending the extracted format reverse-conversion program to said first computer.

22. The program as set forth in claim 19, **characterized in that** said format reverse-conversion program and a third digital signature for said format reverse-conversion program are received in said receiving step.

23. A program for causing a computer to execute:
a receiving step of receiving first data and a first digital signature for at least said first data from a first computer;
a format conversion step of performing format conversion corresponding to a destination of said first data, for said first data received in said receiving step to generate a second data; and
a sending step of sending at least said second data generated in said format conversion step, identification information for identifying a format reverse-conversion program for performing reverse conversion of the format conversion, and said first digital signature to a second computer associated with said destination.

24. A program for causing a computer to execute:
a step of sending a computer for performing format conversion of data a request for sending a format reverse-conversion program for performing reverse conversion of said format conversion, said request including designation of a destination of data; and
a sending step of generating, if said format reverse-conversion program is received from said computer for performing format conversion of data, a digital signature for at least said format reverse-conversion program, and sending at least the generated digital signature, said data, and said digital signature for said data to said computer for performing format conversion of data.

25. A program for causing a computer to execute:
a step of sending a computer for performing format conversion of data a request for sending a format reverse-conversion program for performing reverse conversion of said format conversion, said request including designation of a destination of data; and
a sending step of generating, if said format reverse-conversion program is received from said computer for performing format conversion of data, a digital signature for at least said format reverse-conversion program and said data, and sending at least the generated digital signature and said data to said computer for performing format conversion of data.

26. A program for causing a computer to execute:
a receiving step of receiving data for which format conversion has been performed according to a destination of said data, a digital signature for at least said data before said format conversion, and a format reverse-conversion program for performing reverse conversion of said format conversion;
a step of performing the reverse conversion for said data for which format conversion has been performed, by the received format reverse-conversion program, to generate reversely converted data;
a step of calculating a first hash value from at least said reversely converted data;
a step of restoring a second hash value from the received digital signature; and
a step of comparing the calculated first hash value with the restored second hash value to determine whether there is no alteration.

27. The program as set forth in claim 26, wherein a second signature for said format reverse-conversion program is received in said receiving step,
and said program for causing a computer to further execute the steps of:
calculating a third hash value from said program reverse-conversion program;
restoring a fourth hash value from said second digital signature; and
comparing the calculated third hash value with the restored fourth hash value to determine whether there is no alteration.

28. A program for causing a computer to execute:
a receiving step of receiving data for which format conversion has been performed according to a destination of said data, a digital signature for at least said data before said format conversion, and identification information for identifying a format reverse-conversion program for performing reverse conversion of said format conversion;
a step of extracting said format reverse-conversion program from a storage by using the received identification information for identifying said format reverse-conversion program;
a step of performing the reverse conversion for said data for which format conversion has been performed, by using the extracted format conversion program, to generate reversely converted data;
a step of calculating a first hash value from at least said reversely converted data;
a step of restoring a second hash value from the received digital signature; and
a step of comparing the calculated first hash value with the restored second hash value to determine whether there is no alteration.

29. A computer system, comprising:
receiving means for receiving first data and a first digital signature for at least said first data from a first computer;
format conversion means for performing format conversion corresponding to a destination of said first data, for said first data received by said receiving means to generate second data; and
sending means for sending at least said second data generated by said format conversion means, a format reverse-conversion program for performing reverse conversion of the format conversion, and said first digital signature to a second computer associated with said destination.

30. The computer system as set forth in claim 29, **characterized in that** said receiving means receives a third digital signature for at least said format reverse-conversion program.

31. The computer system as set forth in claim 30, further comprising:
means for receiving a request for sending a format reverse-conversion program from said first computer, said request including designation of a destination; and
means for extracting a format reverse-conversion program corresponding to said destination from a format reverse-conversion program storage, and sending it to said first computer.

32. The computer system as set forth in claim 29, **characterized in that** said receiving means receives said format reverse-conversion program and a third digital signature for said format reverse-conversion program.

33. A computer system, comprising:
receiving means for receiving first data and a first digital signature for at least said first data from a first computer;
format conversion means for performing format conversion corresponding to a destination of said first data, for said first data received in said receiving step to generate a second data; and
sending means for sending at least said second data generated in said step of performing format conversion, identification information for identifying a format reverse-conversion program for performing reverse conversion of the format conversion, and said first digital signature to a second computer associated with said destination.

34. A computer system, comprising:
means for sending a computer for performing format conversion of data a request for sending a format reverse-conversion program for performing reverse conversion of said format conversion, said request including designation of a destination of data; and
sending means for generating, if said format reverse-conversion program is received from said computer for performing format conversion of data, a digital signature for at least said format reverse-conversion program, and sending at least the generated digital signature, said data, and said digital signature for said data to said computer for performing format conversion of data.

35. A computer system, comprising:
means for sending a computer for performing format conversion of data a request for sending a format reverse-conversion program for performing reverse conversion of said format conversion, said request including designation of a destination of data; and
sending means for generating, if said format reverse-conversion program is received from said computer for performing format conversion of data, a digital signature for at least said format reverse-conversion program and said data, and sending at least the generated digital signature and said data to said computer for performing format conversion of data.

36. A computer system, comprising:
receiving means for receiving data for which format conversion has been performed according to a destination of said data, a digital signature for at least said data before said format conversion, and a format reverse-conversion program for performing reverse conversion of said format conversion;
means for performing the reverse conversion for said data for which format conversion has been performed, by the received format reverse-conversion program, to generate reversely converted data;
calculating means for calculating a first hash value from at least said reversely converted data;
restoring means for restoring a second hash value from the received digital signature; and
determining means for comparing the calculated first hash value with the restored second hash value to determine whether there is no alteration.

37. The computer system as set forth in claim 36, **characterized in that**
said receiving means receives a second signature for said format reverse-conversion program, and
said calculating means calculates a third hash value from said program reverse-conversion program,
said restoring means restores a fourth hash value from said second digital signature, and
said determining means compares the calculated third hash value with the restored fourth hash value to determine whether there is no alteration.

38. A computer system, comprising:
receiving means for receiving data for which format conversion has been performed according to a destination of said data, a digital signature for at least said data before said format conversion, and identification information for identifying a format reverse-conversion program for performing reverse conversion of said format conversion;
means for extracting said format reverse-conversion program from a storage by using the received identification information for identifying said format reverse-conversion program;
means for performing the reverse conversion for said data for which format conversion has been performed, by using the extracted format conversion program, to generate reversely converted data;
means for calculating a first hash value from at least said reversely converted data;
means for restoring a second hash value from the received digital signature; and
means for comparing the calculated first hash value with the restored second hash value to determine whether there is no alteration.
